# EUROPÄISCHE PATENTANMELDUNG

(11) **EP 4 176 967 A1**
(43) Veröffentlichungstag der Anmeldung: **10.05.2023**
(21) Anmeldenummer: 22205173.2
(22) Anmeldetag: 02.11.2022
(51) Int. Cl.: B01F 23/235, B28C 5/38, C04B 38/02, C04B 22/06

(54) **VORRICHTUNG UND VERFAHREN ZUM ANMISCHEN EINES MINERALSCHAUMSTOFFS SOWIE APPLIKATIONSVERFAHREN FÜR EINEN MINERALSCHAUMSTOFF**

(30) Priorität: 05.11.2021 DE 102021128804
(71) Anmelder: Fixit Trockenmörtel Holding AG, 6340 Baar (CH)
(72) Erfinder: DALAS, Florent, 38070 Saint Quentin Fallavier (FR); FISCHER, Peter, 5113 Holderbank (CH); BERGMANN, Hagen, 5113 Holderbank (CH); HÄSELI, Georgia, 5113 Holderbank (CH); KIEFERSBECK, Christian, 85356 Freising (DE)
(74) Vertreter: Kuhnen & Wacker Patent- und Rechtsanwaltsbüro PartG mbB

(57) **Zusammenfassung**

Die vorliegende Erfindung betrifft eine Vorrichtung zum Anmischen eines Mineralschaumstoffs aus einem Mörtelslurry und einem schaumbildenden Reaktionspartner. Die Vorrichtung umfasst eine Mischvorrichtung (1), eine Slurryleitung (2) zum Zuführen des Mörtelslurrys zu der Mischvorrichtung (1), eine Reaktionspartnerleitung (3) zum Zuführen des schaumbildenden Reaktionspartners zu der Mischvorrichtung (1) und eine an die Mischvorrichtung (1) anschließende Reaktions-und Förderleitung (4), welcher zur Vermischung und Förderung des Mörtelslurrys und des schaumbildenden Reaktionspartners sowie als Ort der unter Expansion stattfindenden Reaktion von Mörtelslurry und schaumbildendem Reaktionspartner ausgebildet ist. Die Länge der Reaktions- und Förderleitung (4) wird in Abhängigkeit der Umgebungstemperatur derart gewählt, dass ein Materialvolumen des an einem der Mischvorrichtung (1) gegenüberliegenden Austrittsende (41) der Reaktions- und Förderleitung (4) austretenden Mineralschaums nahezu dessen Endmaterialvolumen entspricht.

Ferner betrifft die Erfindung ein Verfahren zum Anmischen eines Mineralschaumstoffs mittels einer solchen Vorrichtung sowie eine Applikation eines mittels einer solchen Vorrichtung und/oder nach einem solchen Verfahren angemischten Mineralschaumstoffs.

## Beschreibung

Die vorliegende Erfindung betrifft eine Vorrichtung zum Anmischen eines Mineralschaumstoffs aus einem Mörtelslurry und einem schaumbildenden Reaktionspartner, ein Verfahren zum Anmischen eines Mineralschaumstoffs mittels einer solchen Vorrichtung sowie ein Applikationsverfahren für einen nach einem solchen Verfahren angemischten Mineralschaumstoff.

Heutzutage kommen als Dämmstoffe in Neubauten häufig feste Materialien wie Polyurethan-Hartschaumstoff (PUR/PIR), Stein- oder Mineralwolle sowie extrudierter oder expandierter Polystyrol-Hartschaum (XPS oder EPS) zum Einsatz.

Diese Materialien bergen zum Teil ein erhebliches Brandrisiko, weshalb zur Zulassung für den Einsatz in beispielsweise Wohngebäuden aufwändige Maßnahmen wie die Behandlung mit Brandschutzmitteln oder der Einsatz von Brandriegeln von Nöten sind. Eine große Problematik entsteht auch dadurch, dass die vorgenannten Materialien die Dampfdiffusionsoffenheit teilweise negativ beeinflussen. Sowohl durch Temperaturunterschiede zwischen Tag und Nacht, als auch bei längerem Niederschlag, liegen mitunter große Luftfeuchtigkeitsdifferenzen zwischen Innen- und Außenseiten der Gebäudeteile vor. Die natürlich ablaufende Diffusion der Feuchtigkeit wird von einigen der vorgenannten Materialien behindert. Die dadurch entstehende Kondensation birgt ein erhebliches Risiko für Schimmelbildung, inklusive der daraus resultierenden gesundheitlichen Risiken. Außerdem stellt die Entsorgung nach dem Abriss eine besondere Herausforderung dar, da die herkömmlichen Dämmmaterialien, gleich ob organischer oder anorganischer Natur, in sehr zeit- und kostenaufwändigen Verfahren vom Beton getrennt werden müssen. Selbst Mineralschaumplatten müssen aufgrund ihrer chemischen Zusammensetzung gesondert entsorgt werden. Auch der Einsatz von Brandschutzmitteln kann eine gesonderte Entsorgung erfordern.

In Bezug auf die Wirtschaftlichkeit haben die vorstehend genannten Dämmmaterialien den Nachteil, dass sie zwar eine geringe Dichte und damit ein geringes Gewicht haben, jedoch ein großes Volumen einnehmen. Die Anlieferung der Dämmmaterialien an eine Baustelle erfordert somit erhöhten logistischen und damit finanziellen Aufwand.

Ein nicht zu unterschätzender Faktor bei der Errichtung von gedämmten Gebäudeteilen ist die Zeit, die zur Montage der Dämmschicht benötigt wird. Als Richtwert nimmt man beispielsweise für XPS oder EPS eine Montagegeschwindigkeit von etwa 15 Minuten pro Quadratmeter Wandfläche an. Neben den reinen Materialkosten entstehen so auch schnell hohe Personalkosten. Funktionell haben alle vorgenannten Dämmmaterialien den Nachteil, dass beim Errichten der Dämmschicht Fugen an den Übergangsbereichen zwischen benachbarten Dämmplatten entstehen, welche als Wärmebrücken fungieren und somit den Wärmedämmwert λ nachteilig erhöhen sowie als ästhetische Beeinträchtigung der Fassade wahrgenommen werden können.

Eine Möglichkeit, den vorstehend genannten Anforderungen in Bezug auf Brandschutz, Feuchtigkeitsdurchlässigkeit und Recyclebarkeit Abhilfe zu leisten und gleichzeitig gute Dämmeigenschaften zu erzielen, liegt in der Verwendung von Schaumbeton.

Schaumbeton ist ein Sammelbegriff für fließfähige Frischbetone, welche neben Bindemittel, Füllstoff und Wasser auch Schaum oder einen Schaumbildner sowie gegebenenfalls Additive enthalten. Klassische Bindemittel sind Zement und Kalk. Aufgrund der Korngröße des Füllstoffes - häufig Kies, Kalkstein oder Quarz - von meist weniger als 2 mm handelt es sich definitionsgemäß eigentlich um Schaummörtel. Da er jedoch im Außenbereich und für tragende Elemente zum Einsatz kommt, spricht man von Schaumbeton. Durch den Einsatz des Schaums bzw. des Schaumbildners entsteht ein leichtes, porenreiches Material, das hervorragende Wärmedämmeigenschaften besitzt. Dies prädestiniert ihn beispielsweise zum Einsatz als Füllmaterial von Hohlräumen oder für leichte, wärmedämmende Ausgleichschichten.

Bindemittel, Füllmaterial und gegebenenfalls Additive werden in der Regel fabrikseitig vermischt, um als Trockenmischung an den Ort der Baustelle transportiert werden zu können. Dort wird diese Trockenmischung mit Wasser zu einer fließfähigen Masse vermischt. Alternativ kann die Vermengung zwischen Trockenmischung und Wasser auch an zentraler Stelle durchgeführt werden, um den Frischbeton anschließend mittels eines Fahrmischers an den Einsatzort zu befördern (Transportbeton).

Eine Vorrichtung zur Vermischung eines Mörtelslurrys mit einem Schaum zur Herstellung eines Schaumbetons wird durch die DE 10 2012 006 049 A1 gelehrt. Der dort beschriebene Statikmischer weist eine innere Geometrie auf, mit welcher eine homogene Vermischung von Mörtelslurry und Schaum erreicht werden soll, ohne dass durch eine übermäßige mechanische Beanspruchung der Schaum zerstört wird.

Ein Verfahren zur Herstellung eines Mineralschaumstoffs aus einem Mörtelslurry und einem schaumbildenden Reaktionspartner wird durch die EP 3 483 131 B1 offenbart, welche als nächstliegender Stand der Technik identifiziert wurde. Einem zunächst angerührten Mörtelslurry wird dabei in einer Förderleitung ein Schaumbildner injiziert, der im weiteren Verlauf der Förderleitung mit dem Mörtelslurry zu einem Mineralschaumstoff reagiert. Mittels einer Anschlussleitung wird der Mineralschaumstoff an eine Stützstruktur appliziert, an welcher er expandiert und anschließend erhärtet. Die Expansion an der Stützstruktur stellt bei der praktischen Umsetzung einen Nachteil dar, da sich die Dicke der sich ausbildenden Dämmschicht aufgrund der Expansion an der Stützstruktur nur eingeschränkt kontrollieren und einstellen lässt.

Der vorliegenden Erfindung liegt somit die Aufgabe zugrunde, ein Anmischverfahren für einen Mineralschaumstoff bereitzustellen, welcher bereits beim Austritt aus einer Förder-/Mischvorrichtung eine formstabile Struktur einnimmt und eine schnellere Montage/Applikation - insbesondere an eine nicht horizontale Stützstruktur - erlaubt, als bei herkömmlichen Dämmmaterialien. Die für dieses Anmischverfahren notwendige Vorrichtung ist vorab zu definieren. Abschließend ist ein Applikationsverfahren zu beschreiben, mittels welchem aus genanntem Mineralschaumstoff eine Dämmschicht ausgebildet wird.

Diese Aufgabe wird mit einer Vorrichtung zum Anmischen eines Mineralschaumstoffs gemäß Anspruch 1, einem Anmischverfahren für einen solchen Mineralschaumstoff gemäß Anspruch 18 und einer Applikation für einen Mineralschaumstoff gemäß Anspruch 24 gelöst. Vorteilhafte Weiterbildungen ergeben sich aus den jeweiligen abhängigen Ansprüchen.

Wie vorstehend erläutert, wird Schaumbeton üblicherweise durch Vermischung eines Mörtelslurrys mit einem Schaum hergestellt. Das erfindungsgemäße Anmischverfahren zeichnet sich demgegenüber dadurch aus, dass der Mörtelslurry mit einem schaumbildenden Reaktionspartner vermischt wird, wobei durch die Vermischung die schaumbildende Reaktion ausgelöst wird. Diese geht einher mit einer Expansion, an deren Abschluss ein Mineralschaumstoff ausgebildet ist.

Die für dieses Verfahren benötigte Vorrichtung besteht aus einer Mischvorrichtung, einer Slurryleitung zum Zuführen des Mörtelslurrys zu der Mischvorrichtung, einer Reaktionspartnerleitung zum Zuführen des schaumbildenden Reaktionspartners zu der Mischvorrichtung und einer Reaktions- und Förderleitung, in welcher Mörtelslurry und schaumbildender Reaktionspartner vermischt werden und dabei die schaumbildende Reaktion abläuft. Die Reaktionsgeschwindigkeit ist von der Außentemperatur sowie der Mörtelzusammensetzung abhängig. Aus diesem Grund wird die Länge der Reaktionsund Förderleitung derart gewählt, dass die schaumbildende Reaktion am Austrittsende der Reaktions- und Förderleitung nahezu abgeschlossen ist, das Materialvolumen des Mineralschaumstoffs beim Austritt also nahezu seinem Endmaterialvolumen entspricht. Das Endmaterialvolumen ist dabei als das Volumen zu verstehen, dass der ausgebrachte Mineralschaumstoff wenige Minuten bis einige Stunden nach der Applikation einnimmt, bevor jedoch eine messbare Abnahme der Dichte durch den Aushärteprozess einsetzt.

Zum Anschluss der Slurryleitung umfasst die Mischvorrichtung einen Eingang, welcher einen Querschnitt von wenigstens 19 mm (3/4") und höchstens 51 mm (2") aufweist, bevorzugt von 25 mm (1"). Die Vorzüge einer solchen Gestaltungsform werden in einem späteren Abschnitt, der sich mit der Slurryleitung befasst, erläutert.

Weiterhin umfasst die Mischvorrichtung einen Eingang zum Anschluss der Reaktionspartnerleitung, welcher wiederum einen Querschnitt von wenigstens 6 mm (1/4") und höchstens 38 mm (1 ½") aufweist, bevorzugt von 13 mm (1/2"). Die Vorzüge einer solchen Gestaltungsform werden in einem späteren Abschnitt, der sich mit der Reaktionspartnerleitung befasst, erläutert.

Im Bereich der Zusammenführung des Eingangs zum Anschluss der Slurryleitung und des Eingangs zum Anschluss der Reaktionspartnerleitung weist die Mischvorrichtung einen Querschnitt von wenigstens 19 mm (3/4") und höchstens 64 mm (2 ½") auf, bevorzugt von 38 mm (1 ½"). Dieses Maß hat sich als vorteilhaft erwiesen, um bereits im Bereich der Zusammenführung eine gute Vermischung von Mörtelslurry und schaumbildendem Reaktionspartner zu erzielen.

Anschließend an den vorstehend erläuterten Zusammenführungsbereich umfasst die Mischvorrichtung weiterhin einen Ausgang zum Anschluss der Reaktions- und Förderleitung. Dieser besitzt einen Querschnitt von wenigstens 6 mm (1/4") und höchstens 51 mm (2"), bevorzugt von 25 mm (1"). Die mit diesem Maß einhergehende Verjüngung bewirkt einen Druckanstieg des Gemischs aus Mörtelslurry und schaumbildendem Reaktionspartner, wodurch sowohl die schaumbildende Reaktion begünstigt wird, als auch die mit der angestrebten Verweildauer des Gemischs im Reaktions- und Förderschlauch korrespondierende Fördergeschwindigkeit vorteilhafterweise eingestellt wird.

Die Mischvorrichtung selbst ist vorzugsweise aus Edelstahl gefertigt, wobei andere korrosionsbeständige Werkstoffe ebenfalls in Frage kommen. Diese Materialauswahl gewährleistet einerseits einen Schutz vor witterungsbedingter Korrosion, andererseits ermöglicht sie eine unproblematische Reinigung.

In einer vorteilhaften Ausfiihrungsform umfasst die Mischvorrichtung am Eingang zum Anschluss der Reaktionspartnerleitung ein Rückschlagventil. Im Falle einer Verstopfung der Reaktions- und Förderleitung kann so verhindert werden, dass sich das reagierende und expandierende Gemisch aus Mörtelslurry und schaumbildendem Reaktionspartner entgegen der vorgesehenen Förderrichtung in die Reaktionspartnerleitung sowie gegebenenfalls in die Fördereinrichtung für den schaumbildenden Reaktionspartner ausbreitet und dort den Prozess stört oder Schäden verursacht.

In einer weiteren vorteilhaften Ausfiihrungsform umfasst die Mischvorrichtung ein Druckentlastungsventil, welches bei Reinigungsarbeiten geöffnet wird.

In einer bevorzugten Ausführungsform umfasst die Mischvorrichtung einen zusätzlichen Eingang, mittels welchem dem Gemisch aus Mörtelslurry und schaumbildendem Reaktionspartner noch vor deren Eintritt in die Reaktions- und Förderleitung ein weiterer oder mehrere weitere Reaktionspartner und/oder Additive zugeführt werden. Dies kann dann vorteilhaft zum Tragen kommen, wenn aufgrund ungünstiger Witterungsbedingungen oder besonderer Umstände auf der Baustelle das Verfahren ohne einen oder mehrere zusätzliche Reaktionspartner und/oder Additive nicht durchführbar wäre oder wenn der Einsatz eines oder mehrerer zusätzlicher Reaktionspartner und/oder Additive das Handling und den Ablauf auf der Baustelle vereinfacht. In Frage kommen hier beispielsweise Additive, die eine Erhärtung des Mineralschaumstoffs vor oder nach dem Austritt aus der Reaktions- und Förderleitung beschleunigen.

Analog zum Eingang zum Anschluss der Slurryleitung an der Mischvorrichtung weist auch die Slurryleitung selbst einen Querschnitt von wenigstens 19 mm (3/4") und höchstens 51 mm (2") auf, vorzugsweise von 25 mm (1"). Weiterhin weist die Slurryleitung, abhängig von den baustellenspezifischen Gegebenheiten, eine Länge von wenigstens 1 m, bevorzugt von wenigstens 10 m und von höchstens 50 m auf. Insbesondere solche Durchmesser, aber auch eine solche Länge, entsprechen handelsüblichen Standardmaßen für Leitungen dieser Art und eignen sich gut für die Kombination mit einer nicht zum Schutzumfang gehörenden Exzenterschneckenpumpe, mit welcher der Mörtelslurry gefördert wird.

Gleichermaßen analog zum Eingang zum Anschluss der Reaktionspartnerleitung an der Mischvorrichtung weist auch die Reaktionspartnerleitung einen Querschnitt von wenigstens 6 mm (1/4") und höchstens 38 mm (1 ½") auf, bevorzugt von 13 mm (1/2"). Weiterhin weist die Reaktionspartnerleitung, abhängig von den baustellenspezifischen Gegebenheiten, eine Länge von wenigstens 1 m, bevorzugt von wenigstens 10 m und von höchstens 50 m auf. Insbesondere solche Durchmesser, aber auch eine solche Länge, entsprechen ebenfalls handelsüblichen Standardmaßen für Leitungen dieser Art und eignen sich gut für die Kombination mit einer nicht zum Schutzumfang gehörenden Exzenterschneckenpumpe, mit welcher der schaumbildende Reaktionspartner gefördert wird.

In gleichermaßen fortgeführter Analogie zum Ausgang zum Anschluss der Reaktions- und Förderleitung an der Mischvorrichtung weist die Reaktions- und Förderleitung einen Querschnitt von wenigstens 6 mm (1/4") und höchstens 51 mm (2"), bevorzugt von 25 mm (1") auf. Dieses Maß entspricht einem handelsüblichen Standardmaß für Leitungen dieser Art.

In Abhängigkeit der Umgebungstemperatur sowie gegebenenfalls der Mörtelzusammensetzung wird eine Länge der Reaktions- und Förderleitung von wenigstens 10 m und höchstens 80 m gewählt. Entsprechend den Gesetzen der Chemie läuft die schaumbildende Reaktion bei höheren Umgebungstemperaturen schneller ab, weshalb in einem solchen Fall eine verkürzte Leitungslänge verwendet wird. Ebenso kann eine veränderte Mörtelzusammensetzung eine Veränderung der schaumbildenden Reaktionszeit verursachen, was ebenfalls durch eine Veränderung der Leitungslänge der Reaktions- und Förderleitung kompensiert wird. Mittels einer solchen Maßnahme wird sichergestellt, dass die schaumbildende Reaktion am Austrittsende der Reaktions- und Förderleitung nahezu abgeschlossen ist. Insbesondere beträgt das Materialvolumen des Mineralschaumstoffs am Austrittsende der Reaktions- und Förderleitung wenigstens 85 %, vorzugsweise wenigstens 90 %, besonders bevorzugt wenigstens 95 % des Endmaterialvolumens des Mineralschaumstoffs.

In einer bevorzugten Ausführungsform sind zur besseren Anpassung an die baustellenspezifischen Gegebenheiten die Slurryleitung und/oder die Reaktionspartnerleitung und/oder die Reaktions- und Förderleitung als biegeflexibler Schlauch ausgeführt. Der Nachteil eines oft höheren Gewichts gegenüber einer starren Leitung wird durch die erhöhte Flexibilität und das dadurch einfachere Handling bei der später beschriebenen Applikation des Mineralschaumstoffs an eine Stützstruktur kompensiert.

In einer bevorzugten Ausführungsform umfasst die Reaktions- und Förderleitung an ihrem Austrittsende oder in dessen unmittelbarer Nähe einen Eingang, mit welchem dem an dieser Stelle nahezu vollständig expandierten Mineralschaumstoff ein weiterer oder mehrere weitere Reaktionspartner und/oder Additive zugeführt werden. Dies kommt dann vorteilhaft zum Tragen, wenn aufgrund ungünstiger Witterungsbedingungen oder besonderer Umstände auf der Baustelle das Verfahren ohne einen oder mehrere zusätzliche Reaktionspartner und/oder Additive nicht durchführbar wäre oder wenn der Einsatz eines oder mehrerer zusätzlicher Reaktionspartner und/oder Additive das Handling und den Ablauf auf der Baustelle vereinfacht. In Frage kommen hier beispielsweise Additive, die eine Erhärtung des Mineralschaumstoffs beschleunigen.

Ein Verfahren zum Anmischen eines Mineralschaumstoffs bedient sich einer der vorstehend beschriebenen Vorrichtungen. Bei einer bekannten Umgebungstemperatur wird durch die Wahl der Länge der Reaktions- und Förderleitung eine solche Verweildauer des Gemischs aus Mörtelslurry und schaumbildendem Reaktionspartner eingestellt, dass die schaumbildende Reaktion beim Erreichen des Austrittsendes nahezu abgeschlossen ist, das Materialvolumen des austretenden Mineralschaumstoffs also nahezu einem Endmaterialvolumen des Mineralschaumstoffs entspricht. Das Materialvolumen des Mineralschaumstoffs am Austrittsende der Reaktions- und Förderleitung beträgt wenigstens 85 %, vorzugsweise 90 %, besonders bevorzugt wenigstens 95 % des Endmaterialvolumens des Mineralschaumstoffs.

In bevorzugten Ausführungsformen dieses Verfahrens wird als schaumbildende Reaktionspartner eine bei einer chemischen Reaktion gasfreisetzende Substanz verwendet. Besonders geeignet sind ein Peroxid, eine Peroxoverbindung, eine Peroxyverbindung oder eine Lösung eines derselben, insbesondere Wasserstoffperoxid (H₂O₂), oder eine beliebige Mischung derselben. Insbesondere Wasserstoffperoxid ist bei entsprechender Verdünnung ohne erhöhte Auflagen an eine Baustelle zu transportieren und mit herkömmlichen Vorrichtungen lagerbar und förderbar. Des Weiteren besitzt Wasserstoffperoxid vorteilhafte Eigenschaften als schaumbildender Reaktionspartner für einen Mörtelslurry, da der entstehende Mineralschaumstoff porenreich und formstabil ist.

In einer Ausfiihrungsform dieses Verfahrens werden der Mörtelslurry und der schaumbildende Reaktionspartner der Mischvorrichtung in einer solchen Menge zugeführt, dass sich am Ausgang der Mischvorrichtung ein Druck von wenigstens 4 bar und höchstens 20 bar, bevorzugt zwischen 8 und 12 bar einstellt. Dieses hat sich bei Tests als der Druckbereich herauskristallisiert, in welchem ein optimaler Reaktionsbeginn zwischen Mörtelslurry und schaumbildendem Reaktionspartner abläuft.

Der nahezu vollständig expandierte, aus dem Reaktions- und Förderschlauch austretende Mineralschaumstoff bildet beim Austritt eine formstabile Struktur aus. Dabei hat es sich als besonders vorteilhaft erwiesen, diese Eigenschaft erfindungsgemäß dahingehend zu nutzen, den aus dem Reaktions- und Förderschlauch austretenden Mineralschaumstoff in mäanderförmigen Bahnen an eine nicht horizontale Stützstruktur zu legen. Der Mineralschaumstoff erhärtet ohne einen wesentlich formverändernden Einfluss der Gravitationskraft in dieser Struktur und bildet eine Dämmschicht aus.

In einer Ausführungsform des Applikationsverfahrens wird die nicht horizontale Stützstruktur mit einem die Haftung des Mineralschaums verbessernden Mittel vorbehandelt. Somit kann einem eventuellen "Wegkippen" der errichteten Dämmschicht vorgebeugt werden.

Mithilfe des vorstehend erläuterten Applikationsverfahrens ist es möglich, die Geschwindigkeit zur Errichtung der Dämmschicht erheblich zu erhöhen, wodurch die auf einer Baustelle entstehenden Personalkosten wiederum erheblich gesenkt werden können.

Da die Volumenzunahme zur Ausbildung des Dämmmaterials erst auf der Baustelle erfolgt, wird die Logistik zu dessen Anlieferung auf die Baustelle erheblich vereinfacht. Anstatt, wie oftmals üblich, Dämmmaterialien mit mehreren Transportfahrzeugen an die Baustelle transportieren zu müssen, reicht für das erfindungsgemäße Anmischverfahren häufig die Anlieferung eines einzelnen Tanks mit dem schaumbildenden Reaktionspartner.

Die erfindungsgemäße Vorrichtung wird nachfolgend anhand eines in der Zeichnung dargestellten Ausführungsbeispiels näher erläutert. Darin zeigt:

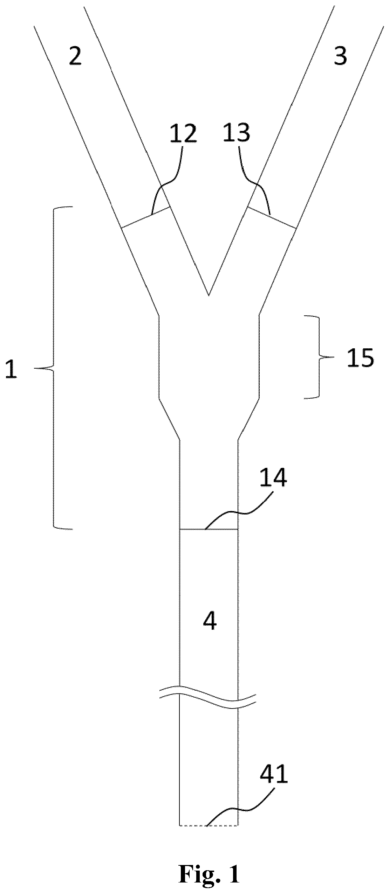

- Fig. 1: einen schematischen Aufbau einer Vorrichtung zum Anmischen eines Mineralschaumstoffs

Fig. 1 zeigt anhand eines schematischen Aufbaus eine Vorrichtung, mit der aus einem Mörtelslurry und einem schaumbildenden Reaktionspartner ein Mineralschaumstoff angemischt werden kann. Das räumlich zentrale Element ist eine Mischvorrichtung 1. Diese umfasst einen Eingang 12 zum Anschluss einer Slurryleitung 2 sowie einen Eingang 13 zum Anschluss einer Reaktionspartnerleitung 3. An die entsprechenden Eingänge 12, 13 sind die Slurryleitung 2 und die Reaktionspartnerleitung 3 angeschlossen. Weiterhin umfasst die Mischvorrichtung 1 einen Ausgang 14 zum Anschluss einer Reaktions- und Förderleitung 4, an welchen eine ebensolche Reaktions- und Förderleitung 4 angeschlossen ist. Am der Mischvorrichtung 1 gegenüberliegenden Ende umfasst die Reaktions- und Förderleitung 4 ein Austrittsende 41. Ferner umfasst die Mischvorrichtung 1 einen Bereich der Zusammenführung der Anschlüsse 15, in welchem der Eingang 12 zum Anschluss der Slurryleitung 2 und der Eingang 13 zum Anschluss der Reaktionspartnerleitung 3 zusammenlaufen.

Die Applikation des Mineralschaumstoffs an eine nicht horizontale Stützstruktur erfolgt durch das Baustellenpersonal, das das Austrittsende 41 des Reaktions- und Förderleitung 4 führt. Beginnend an einer unteren, horizontalen Begrenzung, die beispielsweise eine Bodenplatte sein kann, führt das Baustellenpersonal das Austrittsende 41 der Reaktions- und Förderleitung 4 in einem solchen Abstand zur nicht horizontalen Stützstruktur, dass sich der austretende und nahezu vollständig expandierte Mineralschaumstoff an die nicht horizontale Stützstruktur legt. Bei einem zu geringen Abstand zwischen dem Austrittsende 41 der Reaktions- und Förderleitung 4 und der nicht horizontalen Stützstruktur würde der noch fragile Mineralschaum durch die Aufprallkräfte kollabieren. Ist der Abstand hingegen zu groß, erreicht der austretende Mineralschaum die nicht horizontale Stützstruktur nicht und fällt vorher herab.

Das Baustellenpersonal legt so eine im Wesentlichen horizontale Bahn Mineralschaum an die nicht horizontale Stützstruktur. Die Breite einer solchen Bahn richtet sich nach den Gegebenheiten auf der Baustelle, begrenzende Faktoren können hierfür beispielsweise die Breite der nicht horizontalen Stützstruktur oder der ergonomische Bewegungsradius des Baustellenpersonals sein. Am Ende einer solchen Bahn schwenkt das Baustellenpersonal das Austrittsende 41 der Reaktions- und Förderleitung 4 um etwa den Durchmesser einer Bahn nach oben, und legt die nächste Bahn in umgekehrter Richtung "auf" die vorher gelegte Bahn, wobei die nachfolgend gelegte Bahn Kontakt sowohl zur nicht horizontalen Stützstruktur, als auch zur vorher gelegten Bahn hat. Dieses mäanderförmige Legen von Bahnen aus Mineralschaumstoff wird bis in eine von den Gegebenheiten auf der Baustelle abhängige Höhe wiederholt. Begrenzende Faktoren können hier wiederum die Höhe der nicht horizontalen Stützstruktur oder der ergonomische Bewegungsradius des Baustellenpersonals sein.

Genügt die Dicke der ausgebildeten Lage Mineralschaumstoff nicht den vorab definierten Anforderungen, wird das vorstehend beschriebene Legeverfahren wiederholt, wobei das Legen dann nicht an die nicht horizontale Stützstruktur, sondern an die vorher errichtete Lage Mineralschaumstoff erfolgt. Tests haben gezeigt, dass es dabei für die Stabilität der errichteten Dämmschicht unerheblich ist, ob die erste Lage Mineralschaumstoff zum Zeitpunkt des Legens der zweiten Lage Mineralschaumstoff bereits erhärtet ist oder nicht.

Mit vorstehend erläutertem Applikationsverfahren kann eine fugenlose Dämmschicht beinahe beliebiger Dicke errichtet werden. Die Geschwindigkeit zur Errichtung einer solchen Dämmschicht übertrifft die Geschwindigkeiten zur Errichtung von Dämmschichten mittels herkömmlicher Dämmmaterialien dabei deutlich. Der Abriss oder Rückbau von Gebäuden mit einer nach einem solchen Verfahren errichteten Dämmschicht gestaltet sich dabei deutlich einfacher. Ist die nicht horizontale Stützstruktur, wie im Gebäudebau üblich, eine tragende Betonschale, so müssen die verschiedenen Baumaterialien zur Entsorgung beziehungsweise zum Recyceln nicht getrennt werden. Neben den wirtschaftlichen Aspekten kann mit der vorliegenden Erfindung so auch ein ökologischer Nutzen erzielt werden.

### Bezugszeichenliste

- 1: Mischvorrichtung
- 2: Slurryleitung
- 3: Reaktionspartnerleitung
- 4: Reaktions- und Förderleitung
- 12: Eingang
- 13: Eingang
- 14: Ausgang
- 15: Bereich der Zusammenführung der Anschlüsse
- 41: Austrittsende

## Patentansprüche

1. Vorrichtung zum Anmischen eines Mineralschaumstoffs aus einem Mörtelslurry und einem schaumbildenden Reaktionspartner, mit:
einer Mischvorrichtung (1);
einer Slurryleitung (2) zum Zuführen des Mörtelslurrys zu der Mischvorrichtung (1);
einer Reaktionspartnerleitung (3) zum Zuführen des schaumbildenden Reaktionspartners zu der Mischvorrichtung (1); und
einer an die Mischvorrichtung (1) anschließende Reaktions- und Förderleitung (4), ausgebildet zur Vermischung und Förderung des Mörtelslurrys und des schaumbildenden Reaktionspartners und als Ort der unter einer Expansion stattfindenden Reaktion des Mörtelslurrys und des schaumbildenden Reaktionspartners zu einem Mineralschaumstoff, wobei die Leitungslänge der Reaktions- und Förderleitung (4) in Abhängigkeit der Umgebungstemperatur und/oder der Zusammensetzung des Mörtelslurrys und/oder des schaumbildenden Reaktionspartners derart ausgebildet ist, dass ein Materialvolumen des Mineralschaumstoffs an einem der Mischvorrichtung (1) gegenüberliegenden Austrittsende (41) der Reaktionsund Förderleitung (4) nahezu einem Endmaterialvolumen des Mineralschaumstoffs entspricht.

2. Vorrichtung zum Anmischen eines Mineralschaumstoffs nach Anspruch 1, wobei die Mischvorrichtung (1) aus Edelstahl oder einem anderen korrosionsbeständigen Werkstoff hergestellt ist und/oder wobei die Slurryleitung (2) und/oder die Reaktionspartnerleitung (3) und/oder die Reaktions- und Förderleitung (4) als biegeflexibler Schlauch ausgeführt ist/sind.

3. Vorrichtung zum Anmischen eines Mineralschaumstoffs nach einem der Ansprüche 1 oder 2, wobei ein Eingang (12) zum Anschluss der Slurryleitung (2) der Mischvorrichtung (1) einen Querschnitt von wenigstens 19 mm (3/4") und höchstens 51 mm (2"), bevorzugt von 25 mm (1") aufweist und wobei ein Eingang (13) zum Anschluss der Reaktionspartnerleitung (3) der Mischvorrichtung (1) einen Querschnitt von wenigstens 6 mm (1/4") und höchstens 38 mm (1 ½"), bevorzugt von 13 mm (1/2") aufweist.

4. Vorrichtung zum Anmischen eines Mineralschaumstoffs nach einem der Ansprüche 1 bis 3, wobei die Mischvorrichtung (1) in einem Bereich der Zusammenführung der Anschlüsse (15) für die Slurryleitung (2) und für die Reaktionspartnerleitung (3) einen Querschnitt von wenigstens 19 mm (3/4") und höchstens 64 mm (2 ½"), bevorzugt von 38 mm (1 ½") aufweist und/oder wobei ein Ausgang (14) zum Anschluss der Reaktions- und Förderleitung (4) der Mischvorrichtung (1) einen Querschnitt von wenigstens 6 mm (1/4") und höchstens 51 mm (2"), bevorzugt von 25 mm (1") aufweist.

5. Vorrichtung zum Anmischen eines Mineralschaumstoffs nach einem der Ansprüche 1 bis 4, wobei die Mischvorrichtung (1) am Eingang (13) zum Anschluss der Reaktionspartnerleitung (3) ein Rückschlagventil und/oder für Reinigungsarbeiten ein Druckentlastungsventil umfasst.

6. Vorrichtung zum Anmischen eines Mineralschaumstoffs nach einem der Ansprüche 1 bis 5, wobei die Mischvorrichtung (1) einen Eingang zum Zuführen eines weiteren oder mehrerer weiterer Reaktionspartner und/oder Additive umfasst und/oder wobei die Reaktions- und Förderleitung (4) an ihrem Austrittsende (41) oder in unmittelbarer Nähe ihres Austrittsendes (41) einen Eingang zum Zuführen eines weiteren oder mehrerer weiterer Reaktionspartner und/oder Additive umfasst.

7. Vorrichtung zum Anmischen eines Mineralschaumstoffs nach einem der Ansprüche 1 bis 6, wobei die Slurryleitung (2) eine Länge von wenigstens 1 m, bevorzugt von wenigstens 10 m, und von höchstens 50 m aufweist und/oder einen Querschnitt von wenigstens 19 mm (3/4") und höchstens 51 mm (2"), bevorzugt von 25 mm (1") aufweist.

8. Vorrichtung zum Anmischen eines Mineralschaumstoffs nach einem der Ansprüche 1 bis 7, wobei die Reaktionspartnerleitung (3) eine Länge von wenigstens 1 m, bevorzugt von wenigstens 10 m, und von höchstens 50 m aufweist und/oder einen Querschnitt von wenigstens 6 mm (1/4") und höchstens 38 mm (1 ½"), bevorzugt von 13 mm (1/2") aufweist.

9. Vorrichtung zum Anmischen eines Mineralschaumstoffs nach einem der Ansprüche 1 bis 8, wobei die Reaktions- und Förderleitung (4) eine Länge von wenigstens 10 m und höchstens 80 m aufweist und/oder einen Querschnitt von wenigstens 6 mm (1/4") und höchstens 51 mm (2"), bevorzugt von 19 mm (3/4") aufweist.

10. Verfahren zum Anmischen eines Mineralschaumstoffs aus einem Mörtelslurry und einem schaumbildenden Reaktionspartner mit folgenden Verfahrensschritten:
Zuführen des Mörtelslurrys mittels einer Slurryleitung (2) zu einer Mischvorrichtung (1);
Zuführen des schaumbildenden Reaktionspartners mittels einer Reaktionspartnerleitung (3) zu der Mischvorrichtung (1),
Mischen des Mörtelslurrys und des schaumbildenden Reaktionspartners in der Mischvorrichtung (1),
Förderung und Mischen des Mörtelslurrys und des schaumbildenden Reaktionspartners in einer Reaktions- und Förderleitung (4), in welcher durch eine unter Expansion stattfindende Reaktion des Mörtelslurrys und des schaumbildenden Reaktionspartners ein Mineralschaumstoff gebildet wird, wobei
die Verweildauer des vermischten Mörtelslurrys und des schaumbildenden Reaktionspartners in der Reaktions- und Förderleitung (4) in Abhängigkeit der Umgebungstemperatur und/oder der Zusammensetzung des Mörtelslurrys und/oder des schaumbildenden Reaktionspartners derart gewählt wird, dass ein Materialvolumen des Mineralschaumstoffs an einem der Mischvorrichtung gegenüberliegenden Austrittsende (41) der Reaktions- und Förderleitung (4) nahezu einem Endmaterialvolumen des Mineralschaumstoffs entspricht.

11. Verfahren zum Anmischen eines Mineralschaumstoffs nach Anspruch 10, wobei als schaumbildender Reaktionspartner eine bei einer chemischen Reaktion gasfreisetzende Substanz, vorzugsweise ein Peroxid, eine Peroxoverbindung, eine Peroxyverbindung oder eine Lösung eines derselben, insbesondere Wasserstoffperoxid (H₂O₂), oder eine beliebige Mischung derselben, verwendet wird.

12. Verfahren zum Anmischen eines Mineralschaumstoffs nach einem der Ansprüche 10 oder 11, wobei der Mörtelslurry mittels der Slurryleitung (2) und der schaumbildende Reaktionspartner mittels der Reaktionspartnerleitung (3) der Mischvorrichtung (1) in einer solchen Weise zugeführt werden, dass sich am Ausgang (14) der Mischvorrichtung (1) ein Druck von wenigstens 4 bar und höchstens 20 bar, bevorzugt zwischen 8 und 12 bar einstellt.

13. Verfahren zum Anmischen eines Mineralschaumstoffs nach einem der Ansprüche 10 bis 12, wobei der Mischvorrichtung (1) über einen zusätzlichen Eingang ein weiterer oder mehrere weitere Reaktionspartner und/oder Additive zugeführt werden und/oder der Reaktions- und Förderleitung über einen zusätzlichen Eingang an ihrem Austrittsende (41) oder in unmittelbarer Nähe ihres Austrittsendes (41) ein weiterer oder mehrere weitere Reaktionspartner und/oder Additive zugeführt werden.

14. Applikation eines nach einem Verfahren nach einem der Ansprüche 10 bis 13 und/oder mit einer Vorrichtung nach einem der Ansprüche 1 bis 9 angemischten Mineralschaumstoffs an eine nicht horizontale Stützstruktur, wobei der Mineralschaumstoff beim Austritt aus der Reaktions- und Förderleitung (4) mäanderförmig an die nicht horizontale Stützstruktur appliziert wird und dabei eine im Wesentlichen formstabile Struktur ausbildet, welche an der nicht horizontalen Stützstruktur haftet.

15. Applikation eines Mineralschaumstoffs nach Anspruch 14, wobei die nicht horizontale Stützstruktur mit einem die Haftung des Mineralschaums verbessernden Mittel vorbehandelt wird und/oder wobei das Applikationsverfahren so oft unmittelbar aufeinanderfolgend oder mit zeitlichem Abstand wiederholt wird, bis die Mineralschaumschicht eine vorab definierte Dicke ausgebildet hat.
